# EUROPEAN PATENT SPECIFICATION

(11) **EP 2 842 405 B1**
(45) Date of publication and mention of the grant of the patent: **14.02.2018**
(21) Application number: 14177257.4
(22) Date of filing: 16.07.2014
(51) Int. Cl.: A01D 34/71, A01D 42/00, A01D 34/00, A01D 34/66

(54) **Riding grass-mower**
Selbstfahrender Rasenmäher
Tondeuse automotrice

(30) Priority: 28.08.2013 JP 2013176563; 28.03.2014 JP 2014069298
(43) Date of publication of application: 04.03.2015
(73) Proprietor: Iseki & Co., Ltd., Matsuyama-shi, Ehime 799-2692 (JP)
(72) Inventor: Matsugi, Satoshi, Iyo-gun, Ehime 791-2193 (JP); Toda, Hirotaka, Iyo-gun, Ehime 791-2193 (JP); Kurita, Kazuyuki, Iyo-gun, Ehime 791-2193 (JP); Yoshiki, Shinya, Iyo-gun, Ehime 791-2193 (JP)
(74) Representative: Grünecker Patent- und Rechtsanwälte PartG mbB

(56) References cited:
- EP-A1- 0 981 943
- EP-A1- 1 321 021
- EP-A1- 2 710 874
- US-A1- 2003 196 423
- US-B1- 7 574 852

## Description

### BACKGROUND OF THE INVENTION

### Field of the Invention

The present invention relates to a riding grass-mower which is configured to perform grass-mowing inside a farm field, for example.

### Related art of the Invention

Known is a riding grass-mower comprising: a mower unit which has a mower deck such that the upper face is constituted with a mower deck top-plate member and the lower face is opened, and is configured to mow a grass; a blower which is configured to suck the mowed grass; and a collector which is configured to accommodate the sucked grass (for example, see European Patent, No. EP 1 469 714).

In a riding grass-mower like this which is used as a mower of a two blade-rear discharge/center collection type, for example, the mower deck has a pair of mowing blades which are provided side by side in the left-and-right direction, and are configured to mow the grass.

And, provided is a mechanism such that the rear end part of the top-plate is configured to rotationally move up and down on the ceiling of the mower deck at the front side of the vehicle main body and, in a case where the riding grass-mower is used as a mower of a mulching type, the rear end part of the top-plate like that is allowed to rotationally move down, so that discharge of the grass to the mowed-grass conveying shoot is blocked, and the grass sent in succession is guided to the interior space of the mower deck where the rotation orbits of the mowing blades exist.

EP 1 321 021 A1 discloses a riding grass-mower according to the preamble of claim 1.

### SUMMARY OF THE INVENTION

Now, needless to say, in the above-described riding grass-mower, in a case where grass collecting work of a rear discharge/center collection type is performed, discharge of the grass to the mowed-grass conveying shoot is performed.

However, in a conventional riding grass-mower like that, generation of the mowed-grass clogging at the time of grass collecting work is often observed.

The present invention furnishes, in consideration of the above-described conventional problems, a riding grass-mower which can allow discharge of the mowed-grass at the time of grass collecting work to be smooth, and is able to suppress generation of the mowed-grass clogging. Subject of the present invention is a riding grass-mower, comprising a mower unit (1000) which has a mower deck (1100) such that an upper face is constituted with a mower deck top-plate member (1200) and a lower face is opened, and is configured to mow a grass, wherein
the mower unit (1000), in an interior part of the mower deck (1100), has: a pair of mowing blades (1110, 1120) which are provided side by side in a left-and-right direction, and are configured to mow the grass; and a mowed-grass guiding passage (1400) which is provided at a mower central part in the left-and-right direction, and is configured to guide the mowed grass, and
an air intake hole (1210) is provided at such a portion of the mower deck top-plate member (1200) as is placed at a top of the mowed-grass guiding passage (1400).

By means of this, since the air intake hole (1210) is provided, air intake can be performed, and generation of the mowed-grass clogging at the time of grass collecting work is able to be suppressed.

The riding grass-mower further comprises a shielding member (4000) which is configured to shield the mowed-grass guiding passage (1400), wherein
the shielding member (4000) has: a shielding plate (4100) which is configured to shield the mowed-grass guiding passage (1400); and a mowed-grass branching member (4200) which is provided on the shielding plate (4100), and is configured to guide the mowed grass to respective sides of the pair of the mowing blades (1110, 1120), and
the shielding member (4000) is attachable and detachable.

By means of this, since the riding grass-mower comprises the shielding member (4000) which is attachable and detachable, the mowed-grass guiding passage (1400) can be easily shielded, and with simple work the riding grass-mower is able to be used as a mower of a mulching type. In a case where the shielding member (4000) is attached, a front end part of the shielding plate (4100) is inserted into the air intake hole (1210), and a rear side portion of the shielding member (4000) is fixed to a position at a rear side of the mowed-grass guiding passage (1400).

By means of this, since the front end part of the shielding plate (4100) is inserted into the air intake hole (1210), the air intake hole (1210) can be used for an objective different from the original objective, and increase in the number of components is able to be suppressed. According to a further aspect the mower deck (1100) has a mower deck lower face member (1310) which is provided at a position at a rear side of the mowed-grass guiding passage (1400), and
in a case where the shielding member (4000) is attached, the mowed-grass branching member (4200) is connected to the mower deck lower face member (1310).

By means of this, since the mowed-grass branching member (4200) is connected to the mower deck lower face member (1310), the mowed-grass guiding passage (1400) can be more easily shielded, and with more simple work the riding grass-mower is able to be used as a mower of a mulching type. According to a further aspect the mowed-grass branching member (4200) is a member which has a curved face (S) that protrudes to a front side, toward the grass sent in succession, in a case where the shielding member (4000) is attached.

By means of this, since the mowed-grass branching member (4200) is a member which has the curved face (S) that protrudes to the front side, toward the grass sent in succession, the mowed grass can be smoothly guided to either of the pair of the mowing blades (1110, 1120), and the work efficiency is able to be improved. In a case where the shielding member (4000) is attached, a front side portion of the shielding plate (4100) is arranged so as to slant downward toward a rear side, and the mowed-grass branching member (4200) is arranged below a rear side portion of the shielding plate (4100), and
the shielding member (4000) has side wall plates (4111,4112) which are provided so as to sandwich left-and-right side parts of the shielding plate (4100).

By means of this, since the shielding member (4000) has the side wall plates (4111,4112) which are provided so as to sandwich the left-and-right side parts of the shielding plate (4100), entry of the mowed grass into the mowed-grass guiding passage (1400) over the shielding plate (4100) can be suppressed, and satisfactory mulching is able to be performed.

By the present invention, a riding grass-mower can be furnished which can allow discharge of the mowed-grass at the time of grass collecting work to be smooth, and is able to suppress generation of the mowed-grass clogging.

### BRIEF DESCRIPTION OF THE DRAWINGS

FIG. 1 is a schematic left side view of a riding grass-mower of an embodiment in the present invention;
FIG. 2 is a schematic perspective view of a mower deck of an embodiment in the present invention;
FIG. 3 is a schematic top view of a mower unit of an embodiment in the present invention;
FIG. 4 is a schematic partial sectional view of a mower unit of an embodiment in the present invention;
FIG. 5 is a schematic left side view of a mower unit of an embodiment in the present invention;
FIG. 6A is an illustrative drawing of the mowed-grass height of a mower unit of an embodiment in the present invention,
FIG. 6B is a schematic left partial side view in a neighborhood of the upper side end part of the gauge wheel supporting member of a mower unit of an embodiment in the present invention,
FIG. 6C is a schematic left partial side view in a neighborhood of the front side end part of the gauge wheel front side arm member of a mower unit of an embodiment in the present invention, and
FIG. 6D is a schematic left partial side view in a neighborhood of the gauge wheel front side arm member adjusting mechanism of a mower unit of an embodiment in the present invention;
FIG. 7 is a schematic perspective view of a mulching kit of an embodiment in the present invention;
FIG. 8 is a schematic sectional view of a mower unit to which a mulching kit of an embodiment in the present invention is attached;
FIG. 9 is a schematic perspective view of a mulching kit of a variant example (No. 1) of an embodiment in the present invention;
FIG. 10A is a schematic left side view of a mulching kit of a variant example (No. 1) of an embodiment in the present invention,
FIG. 10B is a schematic top view of a mulching kit of a variant example (No. 1) of an embodiment in the present invention, and
FIG. 10C is a schematic back view of a mulching kit of a variant example (No. 1) of an embodiment in the present invention;
FIG. 11A is a schematic top view of a mower unit to which a mulching kit of a variant example (No. 1) of an embodiment in the present invention is attached, and
FIG. 11B is a schematic back view of a mower unit to which a mulching kit of a variant example (No. 1) of an embodiment in the present invention is attached;
FIG. 12 is a schematic perspective view of a mulching kit of a variant example (No. 2) of an embodiment in the present invention;
FIG. 13A is a schematic left side view of a mulching kit of a variant example (No. 2) of an embodiment in the present invention,
FIG. 13B is a schematic top view of a mulching kit of a variant example (No. 2) of an embodiment in the present invention, and
FIG. 13C is a schematic back view of a mulching kit of a variant example (No. 2) of an embodiment in the present invention;
FIG. 14A is a schematic left side view of a mulching kit of a variant example (No. 3) of an embodiment in the present invention, and
FIG. 14B is a schematic top view of a mulching kit of a variant example (No. 3) of an embodiment in the present invention;
FIG. 15 is a schematic left side view of a mulching kit of a variant example (No. 4) of an embodiment in the present invention;
FIG. 16A is a schematic left side view of a mulching kit of a variant example (No. 5) of an embodiment in the present invention,
FIG. 16B is a schematic top view of a mulching kit of a variant example (No. 5) of an embodiment in the present invention, and
FIG. 16C is a schematic back view of a mulching kit of a variant example (No. 5) of an embodiment in the present invention;
FIG. 17 is a schematic sectional view of a mower unit to which a mulching kit of a variant example (No. 5) of an embodiment in the present invention is not attached; and
FIG. 18 is a schematic sectional view of a mower unit to which a mulching kit of a variant example (No. 5) of an embodiment in the present invention is attached.

### Description of Symbols

- 1000: mower unit
- 1100: mower deck
- 1110, 1120: mowing blade
- 1111, 1121: arc-shaped guide
- 1200: mower deck top-plate member
- 1210: air intake hole
- 1211, 1212: long hole
- 1220: opening part
- 1230: cover
- 1231, 1232: cover perpendicular part
- 1310: mower deck lower face member
- 1311: mower deck lower face member hairpin hole
- 1400: mowed-grass guiding passage
- 1410, 1420: mowed-grass guiding passage guide
- 1411, 1421: mowed-grass guiding passage crosscurrent part
- 1510: gauge wheel
- 1520: gauge wheel supporting member
- 1521, 1522: gauge wheel supporting member pin hole
- 1530: gauge wheel front side arm member
- 1531, 1532: gauge wheel front side arm member pin hole
- 1540: gauge wheel rear side arm member
- 1550: gauge wheel front side arm member adjusting mechanism
- 2000: blower
- 3000: collector
- 3100: collector door
- 4000: mulching kit
- 4100: shielding plate
- 4101, 4102: convex part
- 4111, 4112: side wall plate
- 4200: mowed-grass branching member
- 4201: mowed-grass branching member hairpin hole
- 4300: hairpin
- 4400: perpendicular plate
- 4510: male type fitting member
- 4511: female type fitting member
- 4520: pin member
- 5100: engine
- 5200: transmission case
- 5310: front wheel
- 5410: rear wheel
- 5510: HST
- 5520: frame member
- 5530: driving seat
- 5531: steering handle
- 5540: mowed-grass conveying shoot
- 5550: shooter
- 5560: post
- 5570: ascending-and-descending link mechanism
- 5571: ascending-and-descending link mechanism frame member

### PREFERRED EMBODIMENTS OF THE INVENTION

In the following, referring to the drawings, descriptions are given in detail regarding embodiments in the present invention.

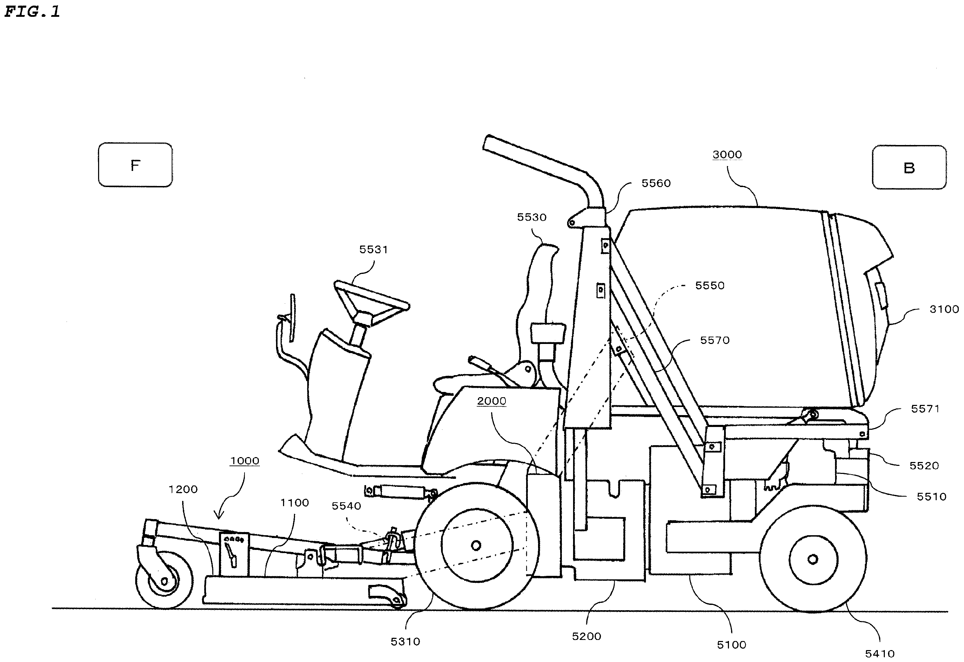

First, mainly referring to FIG. 1, descriptions are specifically given regarding the configuration and action of a riding grass-mower of the present embodiment.

Here, FIG. 1 is a schematic left side view of the riding grass-mower of the embodiment in the present invention.

The riding grass-mower of the present embodiment comprises: the mower unit 1000; the blower 2000; and the collector 3000.

The mower unit 1000 is a means which has the mower deck 1100 such that the upper face is constituted with the mower deck top-plate member 1200 and the lower face is opened, and is configured to mow a grass.

The blower 2000 is a means which is configured to suck the mowed grass.

The collector 3000 is a means which is configured to accommodate the sucked grass.

In the front part of the vehicle main body which is supported by the front wheels 5310 and the rear wheels 5410, the driving seat 5530 for a worker's performing driving is provided.

At the front end of the vehicle main body, the steering handle 5531 for the worker's performing steering is provided.

The mower unit 1000 and the blower 2000 are communicated with each other by the mowed-grass conveying shoot 5540 which is configured to convey the mowed grass.

The grass conveyed in succession by the blower 2000 is discharged into the collector 3000 through the shooter 5550.

At the left-and-right sides of the vehicle main body, the posts 5560 are provided.

The posts 5560 are positioned at a rear side compared with the driving seat 5530.

And, connected to the posts 5560 are the front ends of the ascending-and-descending link mechanism 5570 for performing a dump action of the collector 3000, accompanying opening and closing of the collector door 3100.

The ascending-and-descending link mechanism frame member 5571, which is supported by the frame member 5520 in the left-and-right direction, is provided at the rear end of the ascending-and-descending link mechanism 5570 and passes the rear side of the collector 3000 in the left-and-right direction.

Motive power generated by the engine 5100 is, by the transmission case 5200 which is provided between the blower 2000 and the engine 5100, transmitted to the blower 2000.

The HST (Hydro Static Transmission) 5510 is arranged over the axle case (not shown) of the rear wheels 5410.

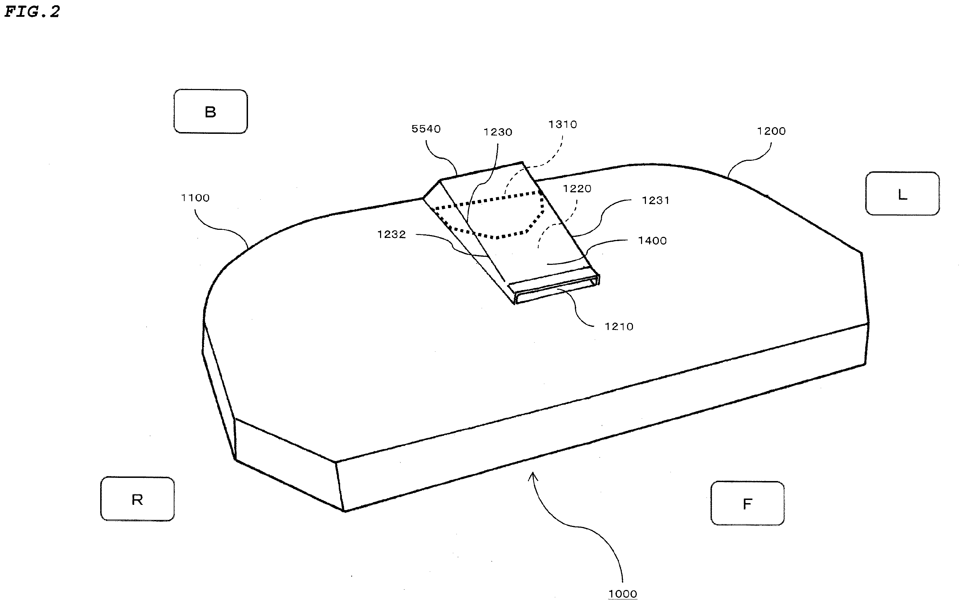

Next, mainly referring to FIGS. 2-4, descriptions are specifically given regarding the configuration and action of the mower unit 1000 of the riding grass-mower of the present embodiment.

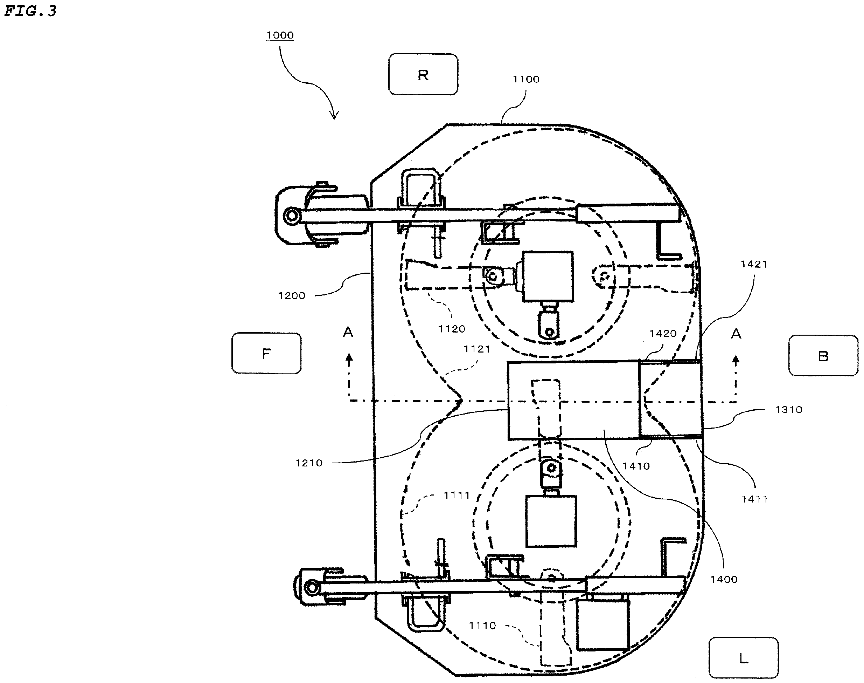

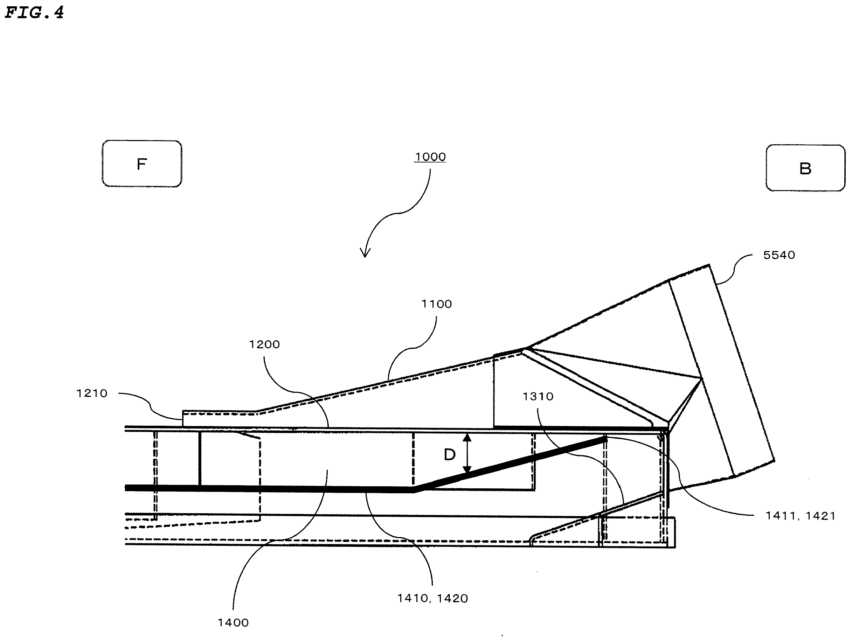

Here, FIG. 2 is a schematic perspective view of the mower deck 1100 of the embodiment in the present invention, FIG. 3 is a schematic top view of the mower unit 1000 of the embodiment in the present invention, and FIG. 4 is a schematic A-A partial sectional view of the mower unit 1000 of the embodiment in the present invention.

The mower unit 1000 has: the mowing blades 1110 and 1120; and the mowed-grass guiding passage 1400.

The mowing blades 1110 and 1120 are a pair of blades which are provided side by side in the left-and-right direction, and are configured to mow the grass while rotating in different directions around the vertical axis along the arc-shaped guides 1111 and 1121.

At the mower central part of the mower deck 1100 in the left-and-right direction where the mowing blades 1110 and 1120 intersect, one part of the mower deck top-plate member 1200 is cut out, and the opening part 1220 is formed. And, the cover 1230, which covers the opening part 1220, is provided so as to form the slope which slants upward toward the rear side.

The cover perpendicular parts 1231 and 1232 are formed, and the cover 1230 has the inverted U-shaped vertical section. And, the air intake hole 1210 is provided as the gap between the front end part of the cover 1230 and the mower deck top-plate member 1200, and is communicated with the opening part 1220.

The mowed-grass guiding passage 1400 is a passage which is provided as the interior space of the mower central part of the mower deck 1100 in the left-and-right direction and the interior space of the cover 1230, and is configured to guide the mowed grass in the direction slanting upward toward the rear side.

The air intake hole 1210 is provided at such a portion of the mower deck top-plate member 1200 as is placed at a top of the mowed-grass guiding passage 1400 and is closer to the front side.

Additionally, the air intake hole 1210 may be provided, for example, at such a portion of the mower deck top-plate member 1200 as is placed at a top of the mowed-grass guiding passage 1400 and is in the vicinity of the central part or closer to the rear side.

The mower deck 1100 further has the mower deck lower face member 1310.

The mower deck lower face member 1310 is a member which forms the slope roughly parallel to the slope of the cover 1230, and is provided at a position at the rear side of the mowed-grass guiding passage 1400.

Like this, in a riding grass-mower which is used as a mower of a two blade-rear discharge/center collection type, at a top of the mowed-grass guiding passage 1400 the slit-shaped air intake hole 1210 for performing suction of the outside air to the mowed-grass conveying duct is provided.

In a case where grass collecting work of a rear discharge/center collection type is performed, by performing moderate suction of the outside air to the mowed-grass conveying duct, the grass collecting performance is improved, since the suction power by the blower 2000 increases along with increase of the wind velocity, and generation of the mowed-grass clogging is suppressed.

As will be later described in detail, in a case where the riding grass-mower is used as a mower of a mulching type, since it is not necessary to perform suction of the outside air to the mowed-grass conveying duct, the air intake hole 1210 is utilized as a mulching kit insertion hole into which the front end part E of the shielding plate 4100 is inserted for attaching the mulching kit 4000 as a mulching switch plate member.

Further, the guide distance D (see FIG. 4) from the lower end edge parts of the left and right mowed-grass guiding passage guides 1410 and 1420 to the mower deck ceiling, on the way from the front side toward the rear side, gradually decreases so that the said lower end edge parts become slant, and becomes substantially zero at the left and right mowed-grass guiding passage crosscurrent parts 1411 and 1421.

In the riding grass-mower of the present embodiment, it is not feared that mowed-grass clogging at the mowed-grass guiding passage crosscurrent parts 1411 and 1421 is generated, since the grass which is immediately discharged outside the mower deck 1100, and the grass which is not immediately discharged outside the mower deck 1100 and stays for a while owing to the so-called round tour are, by means of the aforementioned configuration of the mowed-grass guiding passage guides 1410 and 1420, smoothly separated.

And, quite a lot of grass is not immediately discharged outside the mower deck 1100 and is discharged outside the mower deck 1100 after having been cut fine by the mowing blades 1110 and 1120, so that the amount of the grass accommodated in the collector 3000 increases, and the work distance until the collector 3000 becomes full also increases.

Of course, by adjusting the height, the length and the like of the spot where the guide distance D decreases, in consideration of, for example, the ratio of the grass which is not immediately discharged outside the mower deck 1100 and stays for a while, the grass collecting performance is enabled to be more improved in view of the various conditions and the like relating to the grass.

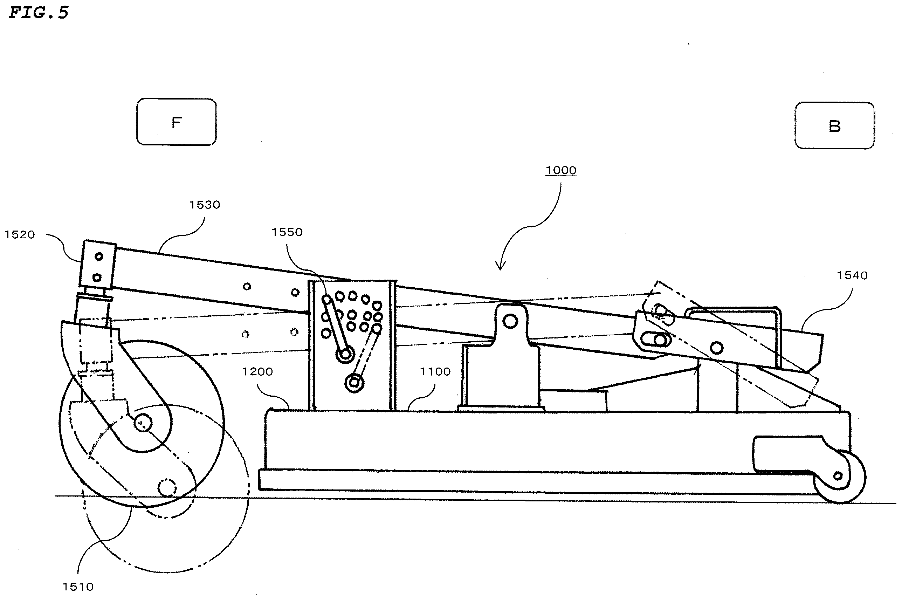

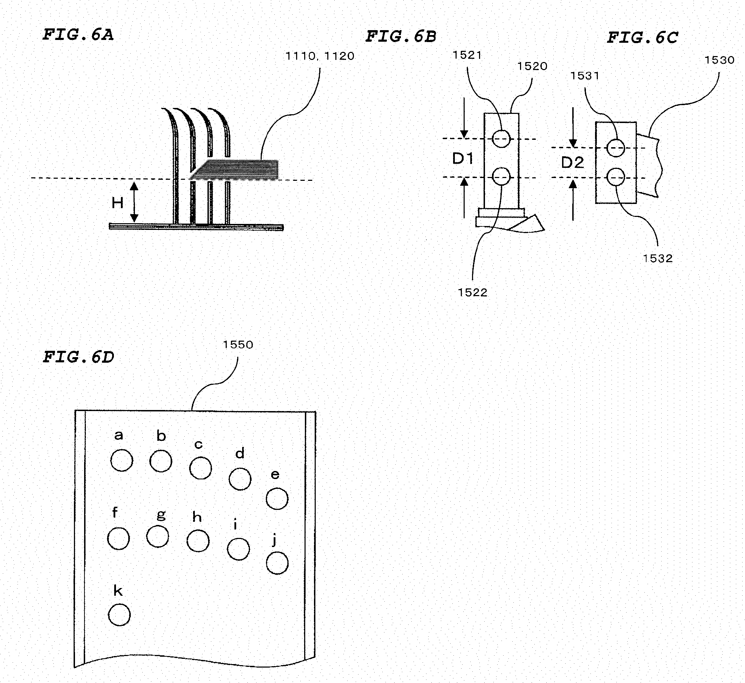

Still further, as is shown in FIG. 5 and FIG. 6, the mowed-grass height H of the mowed-grass from the ground surface by the mowing blades 1110 and 1120 is able to be adjusted every 5 millimeters from 20mm to 125mm.

Here, FIG. 5 is a schematic left side view of the mower unit 1000 of the embodiment in the present invention, FIG. 6A is an illustrative drawing of the mowed-grass height H of the mower unit 1000 of the embodiment in the present invention, FIG. 6B is a schematic left partial side view in a neighborhood of the upper side end part of the gauge wheel supporting member 1520 of the mower unit 1000 of the embodiment in the present invention, FIG. 6C is a schematic left partial side view in a neighborhood of the front side end part of the gauge wheel front side arm member 1530 of the mower unit 1000 of the embodiment in the present invention, and FIG. 6D is a schematic left partial side view in a neighborhood of the gauge wheel front side arm member adjusting mechanism 1550 of the mower unit 1000 of the embodiment in the present invention.

Additionally, in FIG. 5, for making easier to understand the point that the mowed-grass height H is able to be adjusted, some of the plural states corresponding to the adjustments like those are shown at the same time.

The gauge wheel 1510, and the lower side end part of the gauge wheel supporting member 1520 are joined.

The upper side end part of the gauge wheel supporting member 1520, and the front side end part of the gauge wheel front side arm member 1530 are adjustably joined, utilizing a pin which is configured to be inserted into the gauge wheel supporting member pin holes 1521 and 1522 that are provided in the gauge wheel supporting member 1520, and the gauge wheel front side arm member pin holes 1531 and 1532 that are provided in the gauge wheel front side arm member 1530.

In such an adjustable joining, either the pin is inserted into the gauge wheel supporting member pin hole 1521 at the upper side and the gauge wheel front side arm member pin hole 1531 at the upper side, or the pin is inserted into the gauge wheel supporting member pin hole 1522 at the lower side and the gauge wheel front side arm member pin hole 1532 at the lower side.

The rear side end part of the gauge wheel front side arm member 1530, and the front side end part of the gauge wheel rear side arm member 1540 are rotationally-movably joined.

The gauge wheel front side arm member 1530 and the gauge wheel rear side arm member 1540 are both rotationally-movably joined to the main body of the mower unit 1000, and the angle of the gauge wheel front side arm member 1530 with respect to the horizontal face is adjusted by the gauge wheel front side arm member adjusting mechanism 1550.

The angle like this with respect to the horizontal face is adjusted in view of the adjusting positions a-k of eleven spots which are selected in the gauge wheel front side arm member adjusting mechanism 1550 and, by the aforementioned joining configuration, the relative height of the gauge wheel 1510 with respect to the main body of the mower unit 1000 and hence the mowed-grass height H is able to be adjusted every 10 millimeters.

More specifically, when the adjusting positions a-k are allowed to change from a to k, the mowed-grass height H is
(1) allowed to change, in a case where the combination of the gauge wheel supporting member pin hole 1521 and gauge wheel front side arm member pin hole 1531 at the upper side is utilized, every 10 millimeters from 25mm to 125mm, and
(2) allowed to change, in a case where the combination of the gauge wheel supporting member pin hole 1522 and gauge wheel front side arm member pin hole 1532 at the lower side is utilized, every 10 millimeters from 20mm to 120mm.

Even if the adjusting positions a-k are the same, the mowed-grass height H in the case where the combination of the gauge wheel supporting member pin hole 1521 and gauge wheel front side arm member pin hole 1531 at the upper side is utilized is, by 5mm, larger than the mowed-grass height H in the case where the combination of the gauge wheel supporting member pin hole 1522 and gauge wheel front side arm member pin hole 1532 at the lower side is utilized.

This is because the distance D1 in the up-and-down direction between the gauge wheel supporting member pin holes 1521 and 1522 is, by 5mm, larger than the distance D2 in the up-and-down direction between the gauge wheel front side arm member pin holes 1531 and 1532.

Hence, as described above, the mowed-grass height H is able to be adjusted every 5 millimeters from 20mm to 125mm, and a subtle mowed-grass height adjustment in view of the state of the farm field and/or work is realized.

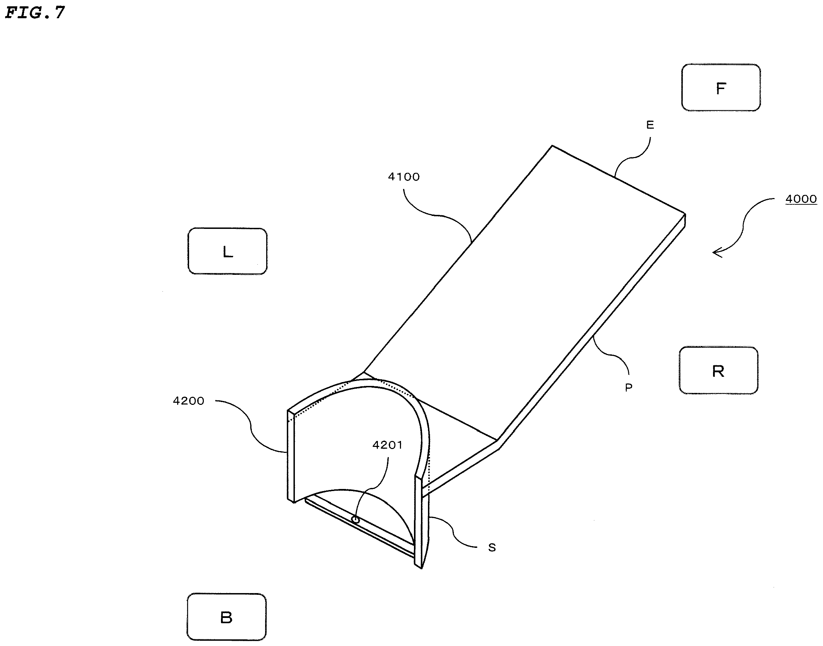

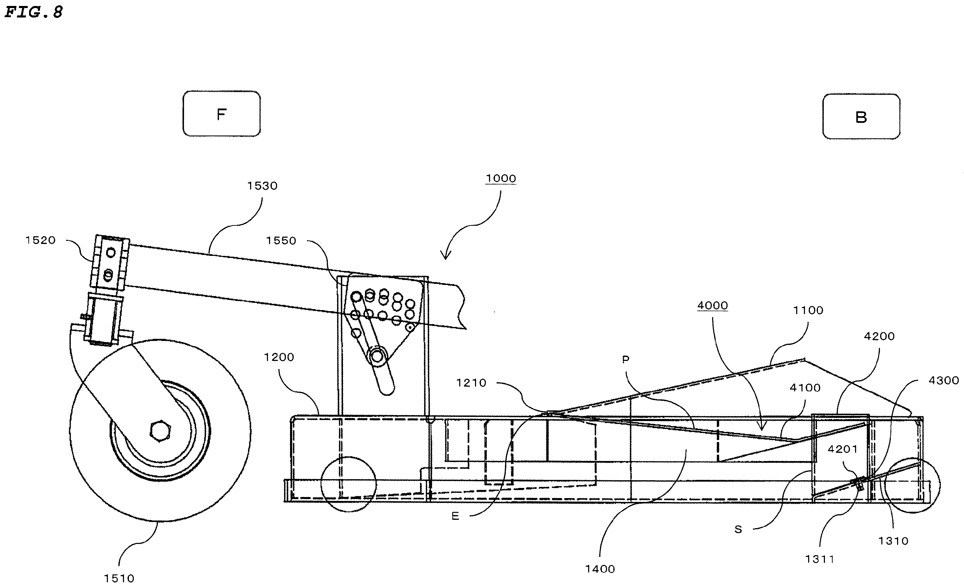

Next, mainly referring to FIGS. 7 and 8, descriptions are more specifically given regarding the configuration and action of the mower unit 1000 of the riding grass-mower of the present embodiment.

Here, FIG. 7 is a schematic perspective view of the mulching kit 4000 of the embodiment in the present invention, and FIG. 8 is a schematic A-A sectional view of the mower unit 1000 to which the mulching kit 4000 of the embodiment in the present invention is attached.

The riding grass-mower of the present embodiment further has the mulching kit 4000.

The mulching kit 4000 is a member which is configured to shield the mowed-grass guiding passage 1400, and is attachable and detachable.

Additionally, the mulching kit 4000 is one example of the shielding member of the present invention.

The mulching kit 4000 has: the shielding plate 4100 which is configured to shield the mowed-grass guiding passage 1400; and the mowed-grass branching member 4200 which is provided on the shielding plate 4100, and is configured to guide the mowed grass to the respective sides of the pair of the mowing blades 1110 and 1120.

The mowed-grass branching member 4200 is a member which has the curved face S that protrudes to the front side, toward the grass sent in succession, in a posture of the mulching kit 4000 being attached.

And, in the posture of the mulching kit 4000 being attached, the front side portion P of the shielding plate 4100 is arranged so as to slant downward toward the rear side, and the mowed-grass branching member 4200 is arranged below the rear side portion of the shielding plate 4100.

In such a configuration in which the shielding plate 4100 is bending with the portion P utilized, since the mulching kit 4000 is attached in a posture of high stability with the rear slanting downward, the grass sent in succession can be smoothly guided to the interior space of the mower deck 1100 where the rotation orbits of the mowing blades 1110 and 1120 exist.

Further, in the case where the mulching kit 4000 is attached, the front end part E of the shielding plate 4100 is inserted into the air intake hole 1210, and the rear side portion of the mulching kit 4000 is fixed to a position at the rear side of the mowed-grass guiding passage 1400.

That manner of fixing is, specifically, as follows. In the case where the mulching kit 4000 is attached, the mowed-grass branching member 4200 is connected to the mower deck lower face member 1310. Namely, the hairpin 4300 is inserted into the mowed-grass branching member hairpin hole 4201 which is provided in the bridging part of the mowed-grass branching member 4200, and the mower deck lower face member hairpin hole 1311 which is provided in the mower deck lower face member 1310.

By contrast, in a conventional riding grass-mower, for example, known is a type such that a mulching kit is utilized which is configured to be attached by fastening a bolt to a nut but, since it is necessary to perform bolt fastening work at plural spots of four spots or so, the work is prone to become complicated, and it is feared that burdens of a worker increase.

However, in the riding grass-mower of the present embodiment, it is not feared that burdens of a worker increase since, in view of whether the riding grass-mower is used as a mower of a mulching type or not, the mulching kit 4000 is allowed to be simply attached or detached by plugging and unplugging from the opening part at the side of the mowed-grass conveying shoot 5540, and easy attaching and detaching of the mulching kit 4000 is performed, utilizing the insertion of the front end part E of the shielding plate 4100 into the air intake hole 1210, and the insertion of the hairpin 4300 into the mowed-grass branching member hairpin hole 4201 and mower deck lower face member hairpin hole 1311.

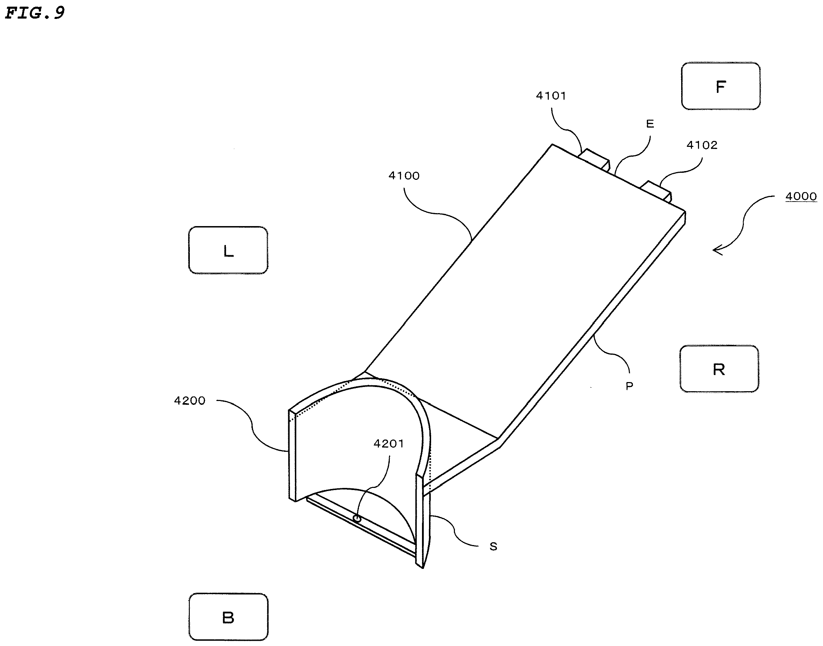

Additionally, in the aforementioned embodiment, the configuration is utilized in which the front end part E of the shielding plate 4100 is inserted into the air intake hole 1210 that is a slit-shaped hole but, for example, as is shown with FIGS. 9-11, a configuration may be utilized in which the two left and right convex parts 4101 and 4102 that are provided in the front end part E of the shielding plate 4100 are inserted into the two left and right long holes 1211 and 1212 respectively.

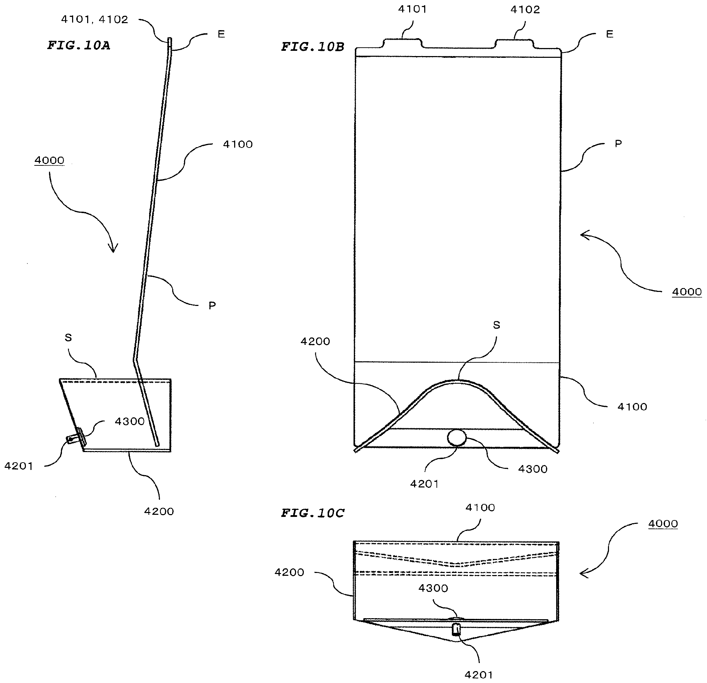

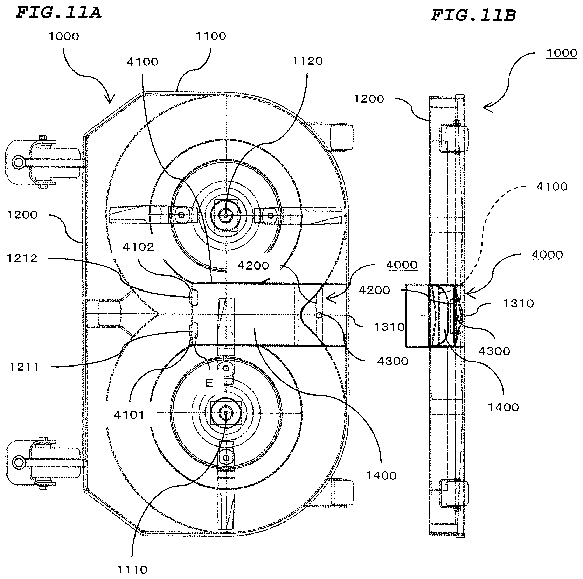

FIG. 9 is a schematic perspective view of the mulching kit 4000 of a variant example (No. 1) of the embodiment in the present invention, FIG. 10A is a schematic left side view of the mulching kit 4000 of the variant example (No. 1) of the embodiment in the present invention, FIG. 10B is a schematic top view of the mulching kit 4000 of the variant example (No. 1) of the embodiment in the present invention, FIG. 10C is a schematic back view of the mulching kit 4000 of the variant example (No. 1) of the embodiment in the present invention, FIG. 11A is a schematic top view of the mower unit 1000 to which the mulching kit 4000 of the variant example (No. 1) of the embodiment in the present invention is attached, and FIG. 11B is a schematic back view of the mower unit 1000 to which the mulching kit 4000 of the variant example (No. 1) of the embodiment in the present invention is attached.

Of course, the main role of the long holes 1211 and 1212 may be, not being the role as air intake holes in a case where the riding grass-mower is used as a mower of a rear discharge/center collection type, the role as mulching kit insertion holes in a case where the riding grass-mower is used as a mower of a mulching type.

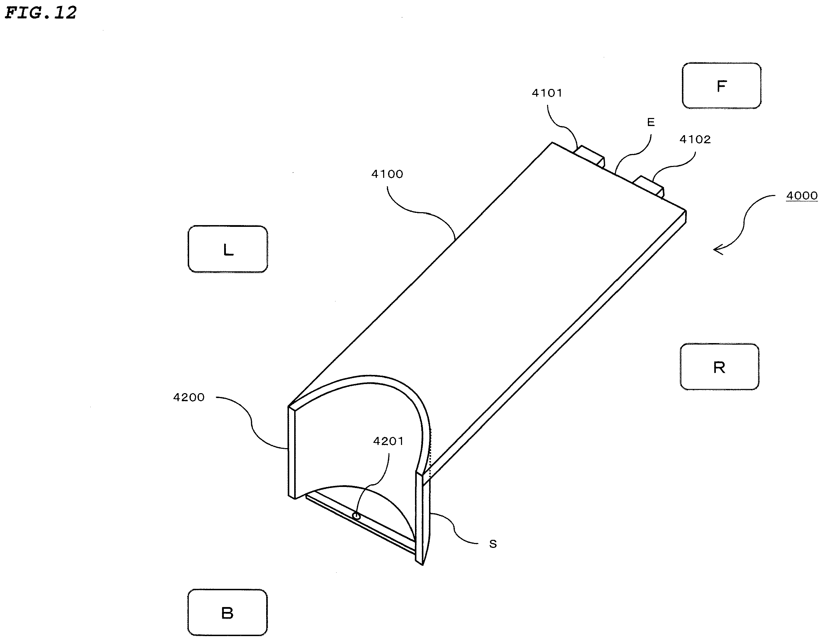

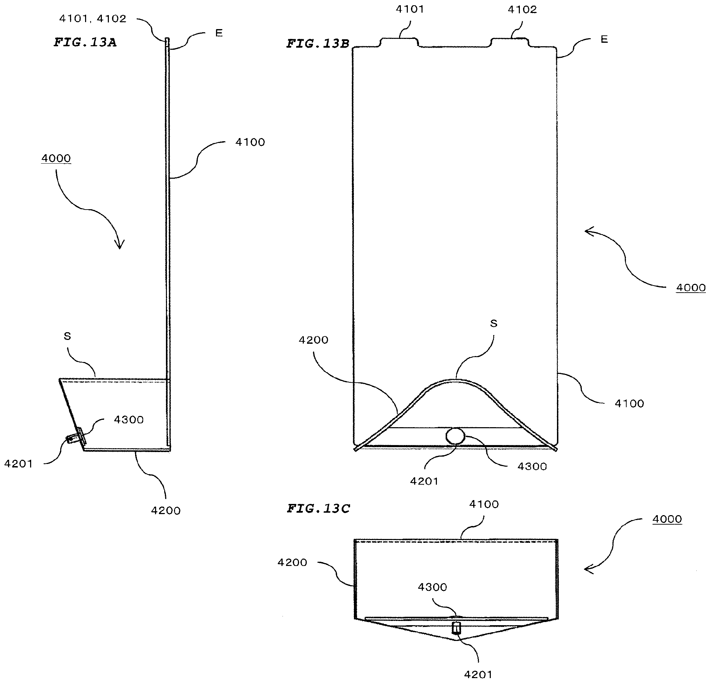

Furthermore, in the aforementioned embodiment, the configuration is utilized in which the shielding plate 4100 is bending with the portion P utilized but, for example, as is shown with FIGS. 12 and 13, a configuration may be utilized in which the shielding plate 4100 is flat.

FIG. 12 is a schematic perspective view of the mulching kit 4000 of a variant example (No. 2) of the embodiment in the present invention, FIG. 13A is a schematic left side view of the mulching kit 4000 of the variant example (No. 2) of the embodiment in the present invention, FIG. 13B is a schematic top view of the mulching kit 4000 of the variant example (No. 2) of the embodiment in the present invention, and FIG. 13C is a schematic back view of the mulching kit 4000 of the variant example (No. 2) of the embodiment in the present invention.

In any of the configurations aforementioned, the mowed-grass branching member 4200 and the mower deck lower face member 1310 are formed in the shapes such that these are in contact with each other without a gap.

Hence, the mulching kit 4000, which is inserted from the opening part at the side of the mowed-grass conveying shoot 5540, securely prevents discharge of the grass to the mowed-grass conveying shoot 5540 and can smoothly guide the grass sent in succession to the interior space of the mower deck 1100 where the rotation orbits of the mowing blades 1110 and 1120 exist.

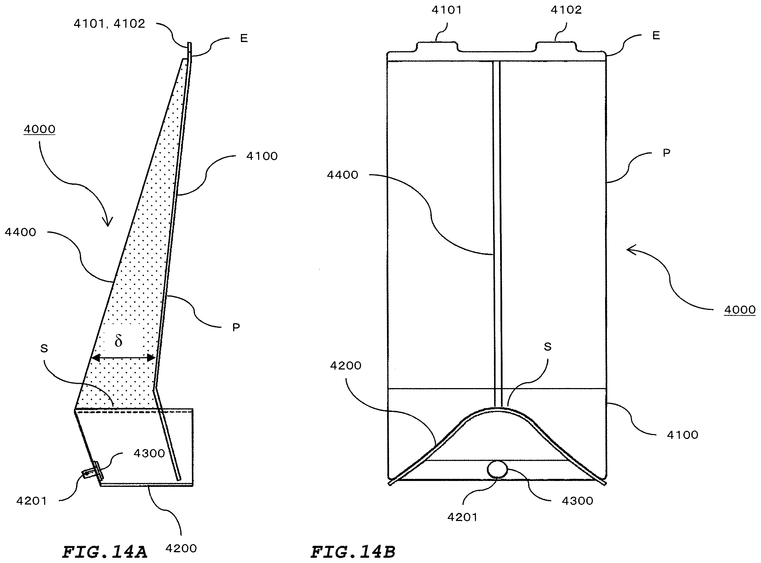

Moreover, as is shown with FIG. 14, below the central part relating to the left-and-right direction of the shielding plate 4100, the perpendicular plate 4400 may be provided.

FIG. 14A is a schematic left side view of the mulching kit 4000 of a variant example (No. 3) of the embodiment in the present invention, and FIG. 14B is a schematic top view of the mulching kit 4000 of the variant example (No. 3) of the embodiment in the present invention. The plate distance δ from the lower end edge part of the perpendicular plate 4400 to the mower deck ceiling, on the way from the rear side toward the front side, gradually decreases so that the said lower end edge part becomes slant, and finally becomes substantially zero.

By providing the perpendicular plate 4400, discharge of the grass from the interior space of the mower deck 1100 to the exterior part is promoted, and the effect of mulching is enabled to be improved.

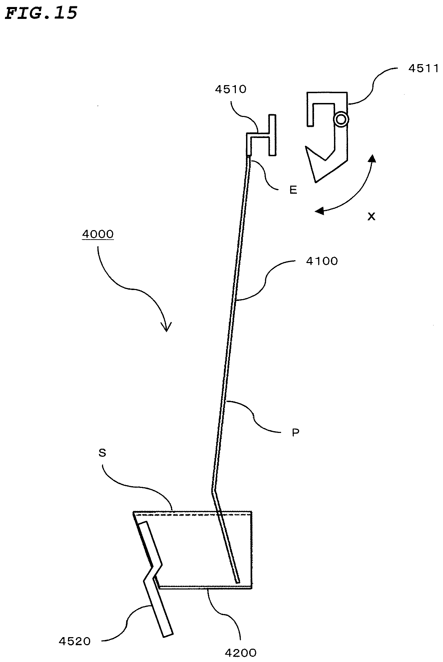

Moreover, as is shown with FIG. 15, attaching and detaching of the mulching kit 4000 may be performed, utilizing the fitting of the male type fitting member 4510 into the female type fitting member 4511 which is provided in a neighborhood of the air intake hole 1210, and the insertion of the pin member 4520 which is provided in the mowed-grass branching member 4200 into the pin member hole (not shown) which is provided in the mower deck lower face member 1310.

FIG. 15 is a schematic left side view of the mulching kit 4000 of a variant example (No. 4) of the embodiment in the present invention. The female type fitting member 4511 has the lock mechanism utilizing the torque spring which is configured to rotationally move in the arrow X direction, and is allowed to be simply attached or detached with the male type fitting member 4510 which is provided in the front end part E of the shielding plate 4100.

Since a configuration is unnecessary in which a bolt and the like are utilized with work prone to become complicated, attaching and detaching of the mulching kit 4000 is able to be performed by one-touch operation, the work time is shortened, and the work efficiency is improved.

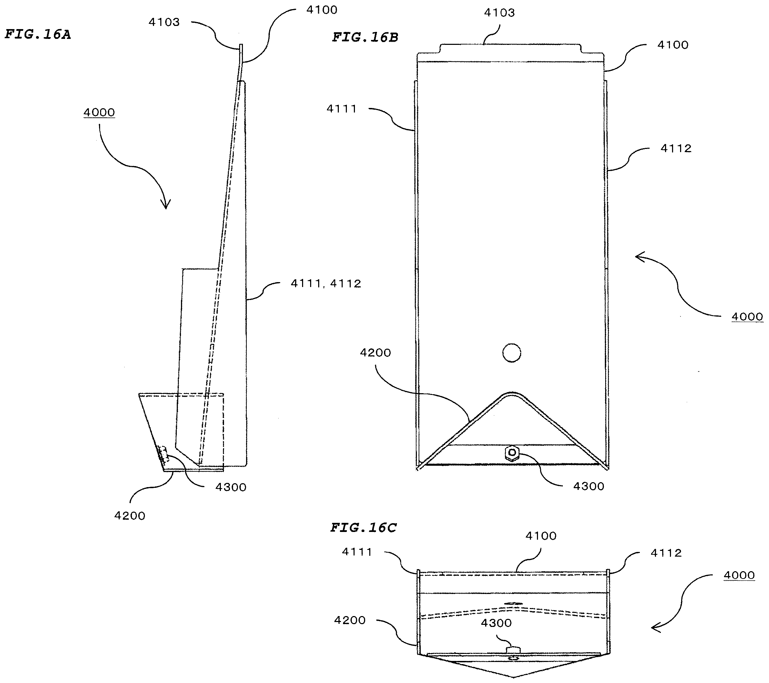

Moreover, as is shown with FIGS. 16-18, the mulching kit 4000 may have the side wall plates 4111 and 4112 which are provided so as to sandwich the left-and-right side parts of the shielding plate 4100.

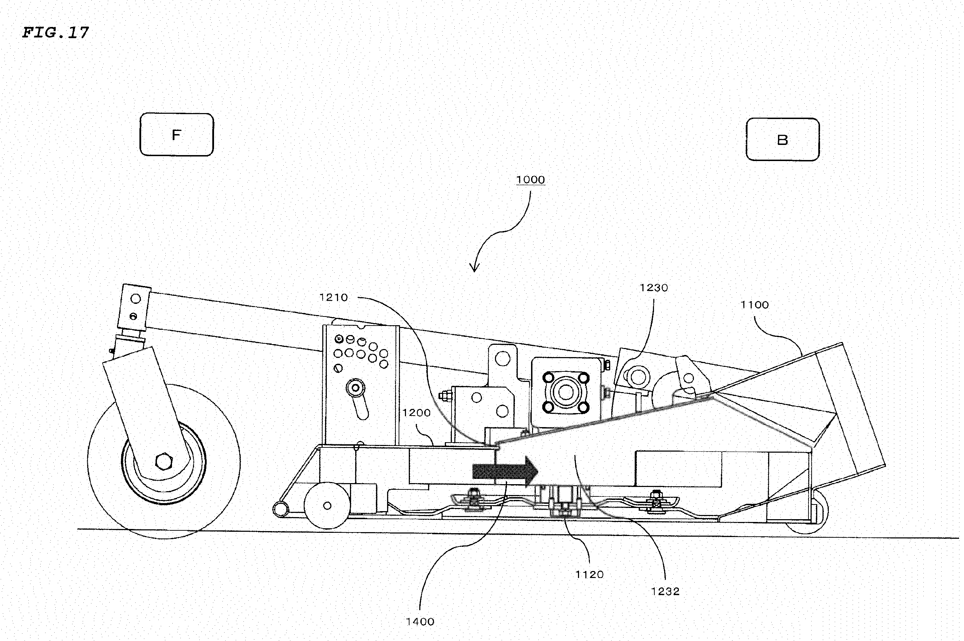

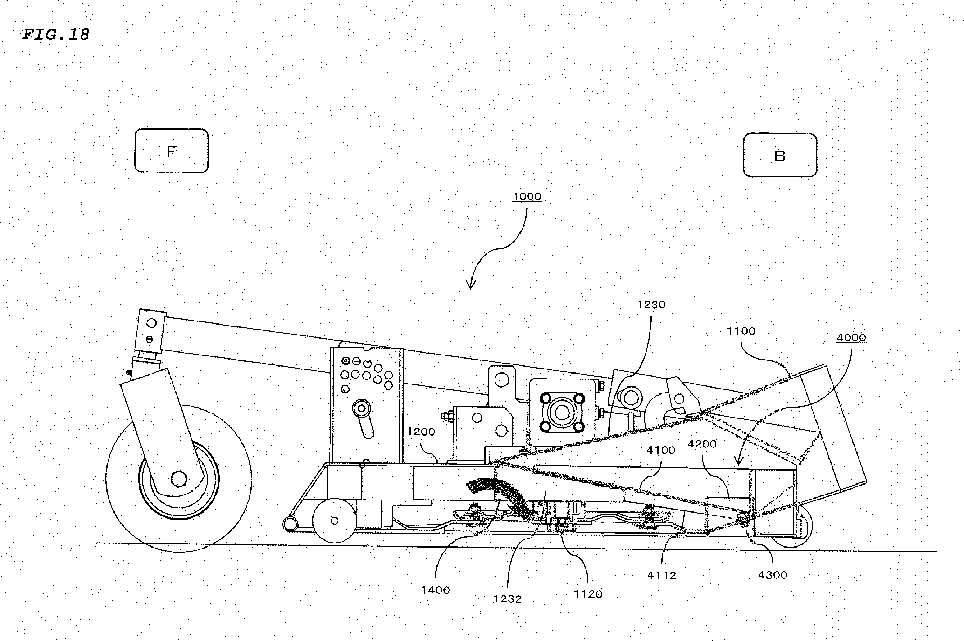

FIG. 16A is a schematic left side view of the mulching kit 4000 of a variant example (No. 5) of the embodiment in the present invention, FIG. 16B is a schematic top view of the mulching kit 4000 of the variant example (No. 5) of the embodiment in the present invention, FIG. 16C is a schematic back view of the mulching kit 4000 of the variant example (No. 5) of the embodiment in the present invention, FIG. 17 is a schematic A-A sectional view of the mower unit 1000 to which the mulching kit 4000 of the variant example (No. 5) of the embodiment in the present invention is not attached, and FIG. 18 is a schematic A-A sectional view of the mower unit 1000 to which the mulching kit 4000 of the variant example (No. 5) of the embodiment in the present invention is attached.

Descriptions are more specifically given as follows.

Namely, at the left-and-right sides of the slope of the shielding plate 4100, throughout from the front side of the shielding plate 4100 to the mowed-grass branching member 4200, the side wall plates 4111 and 4112 which protrude out to the upper side and lower side of the slope are provided.

As described above, the cover 1230 is provided so as to form the slope which slants upward toward the rear side, and the cover 1230 has the inverted U-shaped vertical section. And, it is desirable that the left-and-right side portions of the front side of the cover 1230 be folded downward and form the cover perpendicular parts 1231 and 1232 so as to be extended toward the lower side. In the configuration like this in which the upper face and side faces of the cover 1230 are unified, since the cover perpendicular parts 1231 and 1232 form the side wall parts of the mowed-grass guiding passage 1400, the mowed-grass guiding passage guides 1410 and 1420 are unnecessary and the cover perpendicular parts 1231 and 1232 are configured to shield, cooperating with the side wall plates 4111 and 4112, the mowed-grass guiding passage 1400.

Thus, entry of the mowed grass into the mowed-grass guiding passage 1400 over the shielding plate 4100 is suppressed.

Because of this, there is only a little fear that the grass, which has entered the mowed-grass guiding passage 1400, goes through from the lower face of the shielding plate 4100 to the lateral and is discharged along the exterior walls of the arc-shaped guides 1111 and 1121 which are provided on the peripheries of the mowing blades 1110 and 1120.

Hence, satisfactory mulching can be performed.

Additionally, the rear side portion of the mulching kit 4000 is attachably and detachably attached to the mower unit 1000 by bolt fastening which is performed with the insertion of the hairpin 4300 utilized.

In addition, in the examples of FIGS. 9-11, the configurations are such that the two left and right convex parts 4101 and 4102 which are provided in the front end part E of the shielding plate 4100 are inserted into the two left and right long holes 1211 and 1212 respectively but, in the example of FIG. 16, the wide-width convex part 4103 is configured, and the corresponding long hole is formed at a portion of the air intake hole 1210.

A riding grass-mower in the present invention can allow discharge of the mowed-grass at the time of grass collecting work to be smooth, is able to suppress generation of the mowed-grass clogging, and is useful for an objective of utilization as a riding grass-mower which is configured to perform grass-mowing inside a farm field, for example.

## Claims

1. A riding grass-mower, comprising a mower unit (1000) which has a mower deck (1100) such that an upper face is constituted with a mower deck top-plate member (1200) and a lower face is opened, and is configured to mow a grass, wherein
the mower unit (1000), in an interior part of the mower deck (1100), has: a pair of mowing blades (1110, 1120) which are provided side by side in a left-and-right direction, and are configured to mow the grass; and a mowed-grass guiding passage (1400) which is provided at a mower central part in the left-and-right direction, and is configured to guide the mowed grass,
and the riding grass-mower comprises a shielding member (4000) which is configured to shield the mowed-grass guiding passage (1400), wherein
the shielding member (4000) has: a shielding plate (4100) which is configured to shield the mowed-grass guiding passage (1400); and a mowed-grass branching member (4200) which is provided on the shielding plate (4100), and is configured to guide the mowed grass to respective sides of the pair of the mowing blades (1110,1120), and
the shielding member (4000) is attachable and detachable, **characterised in that** an air intake hole (1210) is provided at such a portion of the mower deck top-plate member (1200) as is placed at a top of the mowed-grass guiding passage (1400).

2. A riding grass-mower according to claim 1, wherein in a case where the shielding member (4000) is attached, a front end part of the shielding plate (4100) is inserted into the air intake hole (1210), and a rear side portion of the shielding member (4000) is fixed to a position at a rear side of the mowed-grass guiding passage (1400).

3. A riding grass-mower according to claim 2, wherein
the mower deck (1100) has a mower deck lower face member (1310) which is provided at a position at a rear side of the mowed-grass guiding passage (1400), and
in a case where the shielding member (4000) is attached, the mowed-grass branching member (4200) is connected to the mower deck lower face member (1310).

4. A riding grass-mower according to any of claims 1 to 3, wherein
the mowed-grass branching member (4200) is a member which has a curved face (S) that protrudes to a front side, toward the grass sent in succession, in a case where the shielding member (4000) is attached.

5. A riding grass-mower according to any of claims 1 to 4, wherein
in a case where the shielding member (4000) is attached, a front side portion of the shielding plate (4100) is arranged so as to slant downward toward a rear side, and the mowed-grass branching member (4200) is arranged below a rear side portion of the shielding plate (4100), and
the shielding member (4000) has side wall plates (4111,4112) which are provided so as to sandwich left-and-right side parts of the shielding plate (4100).

## Patentansprüche

1. Selbstfahrender Rasenmäher, der eine Mäheinheit (1000) umfasst, die ein Mähwerk (1100) derart hat, dass eine obere Fläche mit einem Mähwerk-Oberplattenelement (1200) ausgebildet und eine untere Fläche geöffnet ist, und konfiguriert ist, um Gras mähen, wobei
die Mäheinheit (1000) in einem inneren Teil des Mähwerks (1100) aufweist: ein Paar Mähmesser (1110, 1120), die nebeneinander in einer Links- und Rechtsrichtung bereitgestellt werden und konfiguriert sind, um das Gras zu mähen; und einen Führungsdurchgang (1400) für das gemähte Gras, der an einem Mittelteil des Rasenmähers in der Links- und Rechtsrichtung bereitgestellt wird und konfiguriert ist, um das gemähte Gras zu führen,
wobei der selbstfahrende Rasenmäher ein Abschirmelement (4000) umfasst, das konfiguriert ist, um den Führungsdurchgang (1400) für das gemähte Gras abzuschirmen, wobei
das Abschirmelement (4000) aufweist: eine Abschirmplatte (4100), die konfiguriert ist, um den Führungsdurchgang (1400) für das gemähte Gras abzuschirmen; und ein Verzweigungselement (4200) für das gemähte Gras, das an der Abschirmplatte (4100) bereitgestellt wird und konfiguriert ist, um das gemähte Gras zu jeweiligen Seiten des Paars der Mähmesser (1110, 1120) und des Abschirmelements (4000) zu führen, und
das Abschirmelement (4000) anbringbar und lösbar ist,
**dadurch gekennzeichnet, dass**
ein Lufteinlassloch (1210) an einem derartigen Teil des Mähwerk-Oberplattenelements (1200) bereitgestellt wird, wenn es an einer Oberseite des Führungsdurchgangs (1400) für das gemähte Gras platziert ist.

2. Selbstfahrender Rasenmäher nach Anspruch 1, wobei in einem Fall, in dem das Abschirmelement (4000) angebracht ist, ein vorderes Endteil der Abschirmplatte (4100) in das Lufteinlassloch (1210) eingesetzt ist und ein hinteres Seitenteil des Abschirmelements (4000) an einer Position an einer hinteren Seite des Führungsdurchgangs (1400) für das gemähte Gras fixiert ist.

3. Selbstfahrender Rasenmäher nach Anspruch 2, wobei
das Mähwerk (1100) ein unteres Flächenelement (1310) des Mähwerks hat, das an einer Position an einer hinteren Seite des Führungsdurchgangs (1400) für das gemähte Gras bereitgestellt wird, und
in einem Fall, in dem das Abschirmelement (4000) angebracht ist, das Verzweigungselement (4200) für das gemähte Gras mit dem unteren Flächenelement (1310) des Mähwerks verbunden ist.

4. Selbstfahrender Rasenmäher nach einem der Ansprüche 1 bis 3, wobei
das Verzweigungselement (4200) für das gemähte Gras ein Element ist, das eine gekrümmte Fläche (S) hat, die in einem Fall, in dem das Abschirmelement (4000) angebracht ist, zu einer Vorderseite in Richtung auf das nacheinander geschickte Gras vorsteht.

5. Selbstfahrender Rasenmäher nach einem der Ansprüche 1 bis 4, wobei
in einem Fall, in dem das Abschirmelement (4000) angebracht ist, ein vorderes Seitenteil der Abschirmplatte (4100) so angeordnet ist, dass es sich nach unten zu einer hinteren Seite neigt, und das Verzweigungselement (4200) für das gemähte Gras unter einem hinteren Seitenteil der Abschirmplatte (4100) angeordnet ist und
das Abschirmelement (4000) Seitenwandplatten (4111, 4112) hat, die so bereitgestellt werden, dass die linken und rechten Seitenteile der Abschirmplatte (4100) dazwischen angeordnet sind.

## Revendications

1. Tondeuse automotrice, comprenant une unité de tonte (1000) qui présente un plateau de tonte (1100) de sorte qu'une face supérieure soit constituée d'un élément formant plaque supérieure de plateau de tonte (1200) et qu'une face inférieure soit ouverte, et est configurée pour tondre un gazon, où
l'unité de tonte (1000), dans une partie intérieure du plateau de tonte (1100), présente : une paire de lames de tonte (1110, 1120) qui sont prévues côte à côte dans un sens gauche et droit, et sont configurées pour tondre le gazon ; et
un passage de guidage de gazon tondu (1400) qui est prévu au niveau d'une partie centrale de tonte dans le sens gauche et droit, et est configuré pour guider le gazon tondu, et
la tondeuse automotrice comprend un élément de protection (4000) qui est configuré pour protéger le passage de guidage de gazon tondu (1400),
l'élément de protection (4000) présentant : une plaque de protection (4100) qui est configurée pour protéger le passage de guidage de gazon tondu (1400) ; et un élément de ramification de gazon tondu (4200) qui est prévu sur la plaque de protection (4100), et qui est configuré pour guider le gazon tondu vers les côtés respectifs de la paire de lames de tonte (1110, 1120), et
l'élément de protection (4000) peut être fixé et détaché,
**caractérisée en ce qu'**un trou de prélèvement d'air (1210) est prévu au niveau d'une partie de l'élément formant plaque supérieure de plateau de tonte (1200) comme celle placée au sommet du passage de guidage de gazon tondu (1400).

2. Tondeuse automotrice selon la revendication 1, dans laquelle dans un cas où l'élément de protection (4000) est fixé, une pièce d'extrémité avant de la plaque de protection (4100) est insérée dans le trou de prélèvement d'air (1210), et une partie de côté arrière de l'élément de protection (4000) est fixée à une position située au niveau d'un côté arrière du passage de guidage de gazon tondu (1400).

3. Tondeuse automotrice selon la revendication 2, dans laquelle
le plateau de tonte (1100) présente un élément de face inférieure de plateau de tonte (1310) qui est prévu au niveau d'une position située sur un côté arrière du passage de guidage de gazon tondu (1400), et
dans un cas où l'élément de protection (4000) est fixé, l'élément de ramification de gazon tondu (4200) est connecté à l'élément de face inférieure de plateau de tonte (1310).

4. Tondeuse automotrice selon l'une quelconque des revendications 1 à 3, dans laquelle
l'élément de ramification de gazon tondu (4200) est un élément qui présente une face incurvée (S) qui fait saillie au niveau d'un côté avant, vers le gazon envoyé successivement, dans un cas où l'élément de protection (4000) est fixé.

5. Tondeuse automotrice selon l'une quelconque des revendications 1 à 4, dans laquelle
dans un cas où l'élément de protection (4000) est fixé, une partie de côté avant de la plaque de protection (4100) est disposée afin de s'incliner vers le bas vers un côté arrière, et l'élément de ramification de gazon tondu (4200) est disposé en-dessous d'une partie de côté arrière de la plaque de protection (4100), et
l'élément de protection (4000) présente des plaques formant paroi latérale (4111, 4112) qui sont prévues afin de prendre en sandwich les parties de côté gauche et droit de la plaque de protection (4100).
